# EUROPÄISCHE PATENTSCHRIFT

(11) **EP 1 295 661 B1**
(45) Veröffentlichungstag und Bekanntmachung des Hinweises auf die Patenterteilung: **02.11.2005**
(21) Anmeldenummer: 02018104.6
(22) Anmeldetag: 13.08.2002
(51) Int. Cl.: B23D 15/00

(54) **Vorrichtung zum Beschneiden des Randes eines Blechteils**
Apparatus for trimming the edge of a metal sheet
Dispositif pour le rognage d'une tôle

(30) Priorität: 19.09.2001 DE 10146058
(43) Veröffentlichungstag der Anmeldung: 26.03.2003
(73) Patentinhaber: Bayerische Motoren Werke Aktiengesellschaft, 80809 München (DE)
(72) Erfinder: Oberberger, Arne, 81375 München (DE); Scharff, Herbert, 86415 Mering (DE)

(56) Entgegenhaltungen:
- DE-A- 4 034 278
- DE-A- 4 316 960
- GB-A- 2 239 620

## Beschreibung

Die Erfindung bezieht sich auf eine Vorrichtung der im Oberbegriff des ersten Anspruchs angegebenen Art.

Tiefgezogene oder anderweitig umgeformte Bleche werden vor einer Weiterbearbeitung an ihrem Rand beschnitten. Um mehrere hintereinander angeordnete Beschneidwerkzeuge zu sparen, ist man dazu übergegangen, das Blechteil auf einmal rundherum mit Hilfe eines beweglichen Obermessers und eines feststehenden Untermessers zu beschneiden. Der dabei anfallende ringförmige Abfall muss in der gleichen Maschine in transportierbare Stücke getrennt werden, um aus der Schneidmaschine abtransportiert werden zu können.

Beim Beschneiden des Abfalls ist es wesentlich, dass zuerst der Rand vom Blechteile abgetrennt wird und dann erst der abgetrennte Rand geschnitten wird. Dies bedeutet, dass aufgrund der Teilegeometrie und der notwendigen Zentrierung des Blechteils das Untermesser des Abfalltrennmessers um ca. 5 mm von der Randschnittkante nach unten versetzt sein muss. Dadurch muss im Obermesser das obere Abfalltrennmesser zum Durchtrennen des Abfalls auch um ca. 5 mm von der Schnittkante für den Randbereich des Blechteils nach unten versetzt werden, d. h. das obere Abfalltrennmesser eilt dem Obermesser um 5 mm voraus. Dadurch wird zuerst der Abfall getrennt, bevor das Blechteil beschnitten wird. Dies ist aber nachteilig, da dann das bereits fertig verformte Blechteil örtlich verbogen wird, also beschädigt wird.

Um dies zu verhindern, ist es aus der DE 40 34 278 A bekannt, zum Trennen des Abfalls eine Schere zu verwenden, die aus einem feststehenden unteren Abfalltrennmesser und einem beweglichen, an dem unteren Abfalltrennmesser befestigten oberen Abfalltrennmesser besteht. Betätigt wird das verschwenkbar gelagerte obere Abfalltrennmesser über einen Stößel, der am Obermesser befestigt ist und das obere Abfalltrennmesser erst dann in Schnittposition bringt, wenn der Rand vom Blechteil bereits abgetrennt ist.

Problematisch ist es hierbei, dass der abgeschnittene Randbereich auch vollständig durchgetrennt wird.

Aus der DE 43 16 960 C ist eine gattungsbildende Hubschere mit Abfalltrenneinrichtung zum Schneiden geformter Bleche bekannt. Hierbei wird in dem Obermesser ein oberes Abfalltrennmesser verschwenkbar gelagert, wobei die Schwenkachse des oberen Abfalltrennmessers in der Schnittkante des Obermessers liegt. Damit soll zum einen erreicht werden, dass zuerst der Rand vom Blechteil vollkommen abgetrennt wird und dann erst der abgetrennte Rand quergeschnitten in mindestens zwei Stücke aufgeteilt wird.

Diese Anordnung hat nach den Nachteil, dass das verschwenkbar gelagerte obere Abfalltrennmesser eine große Führungsfläche aufweist und damit entsprechend hohe Verschwenkkräfte notwendig sind. Darüber hinaus dient das obere Abfalltrennmesser auch gleichzeitig zum Querschneiden, so dass zu der verschwenkbaren Lagerung gleichzeitig noch Schnittkräfte in Querrichtung aufgenommen werden müssen. Dies bedeutet einen erhöhten Verschleiß seiner Lagerung.

Aufgabe der vorliegenden Erfindung ist es, hier Abhilfe zu schaffen und eine Vorrichtung zum Beschneiden des Randes eines Blechteils und zum Trennen des abgeschnittenen Randes in mindestens zwei Teile aufzuzeigen, das einfach und sicher aufgebaut ist, so dass mit hoher Präzision geschnitten werden kann.

Diese Aufgabe wird durch die Merkmale des ersten Anspruchs gelöst. Die Lösung basiert auf der Idee, dass an dem Obermesser das obere Abfalltrennmesser starr befestigt ist und zwar derart, dass sein vorderer Schnittbereich höher liegt als die Schnittkante des Obermessers. Dadurch wird sichergestellt, dass der verschwenkbare Teil des Obermessers nicht auch gleichzeitig zum Querschneiden dient. Damit sind die Schnittkanten - bis auf die Schnittkante im verschwenkbaren Teil des Obermessers - starr angeordnet und können dementsprechend präzise schneiden. Die Schnittgenauigkeit hängt damit nur noch von der Genauigkeit der Vertikalführung für das Obermesser ab.

Die Unteransprüche 2 bis 7 beschreiben vorteilhafte Ausgestaltungen der Erfindung.

Das Verdecken und Freigeben der vorderen Schnittlinie des oberen Abfalltrennmessers wird besonders einfach nach den Merkmalen des Anspruchs 2 erreicht, wobei durch die Weiterbildung der Erfindung gemäß Anspruch 3 die Gewichtskraft des schwenkbaren Teils des Obermessers mit als Anpresskraft beim Schneiden ausgenutzt wird.

Der verschwenkbare Teil des Obermessers kann mit Hilfe eines Motors verschwenkt werden, er kann jedoch - wie Anspruch 5 vorschlägt - zwangsweise bei der Abwärtsbewegung des Obermessers durch das feststehende untere Abfalltrennmesser erzielt werden.

Gemäß Anspruch 4 wird der verschwenkbare Teil des Obermessers gegen eine Feder, bevorzugt eine Gasfeder, verschwenkt. Hierdurch wird die Rückstellbewegung in die Ausgangslage selbsttätig beim Hochfahren des Obermessers erzielt.

Im folgenden wird die Erfindung anhand eines bevorzugten Ausführungsbeispiels näher erläutert. Es stellen dar:
- Fig. 1a - Fig. 1d: die erfindungsgemäße Vorrichtung vor Einleitung des Beschneidevorganges in verschiedenen Ansichten;
- Fig. 2a - Fig. 2d: die erfindungsgemäße Vorrichtung nach dem Abschneiden des Randes;
- Fig. 3a - Fig. 3d: die erfindungsgemäße Vorrichtung zum Durchtrennen des abgeschnittenen Randes.

In allen drei Figuren sind perspektivische Ansichten dargestellt, wobei alle Figuren a die erfindungsgemäße Anordnung von rechts hinten, alle Figuren b die Anordnung von links hinten und alle Figuren c die Anordnung von schräg von vorne zeigen.

In allen Figuren ist nur ein perspektivischer Ausschnitt einer Beschneidepresse 1 dargestellt und zwar nur ein Teil zum Beschneiden eines Teiles des Randes. Ganz allgemein ist hierbei das Untermesser mit 2, das Obermesser mit 3, das untere Abfalltrennmesser mit 4 und das obere Abfalltrennmesser mit 5 bezeichnet.

Das Obermesser 3 ist mindestens zweiteilig ausgeführt. Es besteht aus mindestens einem ersten Teil 6 und einem daran verschwenkbar gelagerten Teil 7. Mit 8 ist die Schwenkachse des verschwenkbaren Teiles 7 des Obermessers 3 bezeichnet. An dem Obermesser 3 ist das obere Abfalltrennmesser 5 starr angeordnet.

Das verschwenkbare Teil 7 wird über einen Anschlag 9 eingestellt und verschwenkt gegen den Druck einer Gasfeder 10.

Mit 11 ist ein Blechteil bezeichnet, dessen Rand 12 dann in zwei Teile 12.1 und 12.2 geteilt werden soll.

Wie Fig. 1c zeigt, bildet das Obermesser 3 in der Ausgangsstellung eine durchgehende Schnittkante 13, wobei die Schnittkante 13 selbst zum einen von dem feststehenden Teil 6 des Obermessers 3 und zum anderen durch den verschwenkbaren Teil 7 gebildet wird. Das obere Abfalltrennmesser 5 ist in seinem nach vorne zur Schnittkante 3 hin weisenden Bereich nach oben hochgezogen, so dass es in der gleichen Ebene wie die Schnittkante 13 endet. Das untere Abfalltrennmesser 4 ist entsprechend ausgestaltet, seine Schnittkante 16 liegt jedoch immer tiefer als die Schnittkante 14. Den Verlauf der Schnittkante 16 des unteren Abfalltrennmessers 4 zeigt Figur 1d deutlich. Hier wurde zur Verdeutlichung ein Teil des Obermessers 3 fortgelassen.

Die Schnittkante 13 am Obermesser 3 korrespondiert mit einer Schnittkante 14 am Untermesser 2.

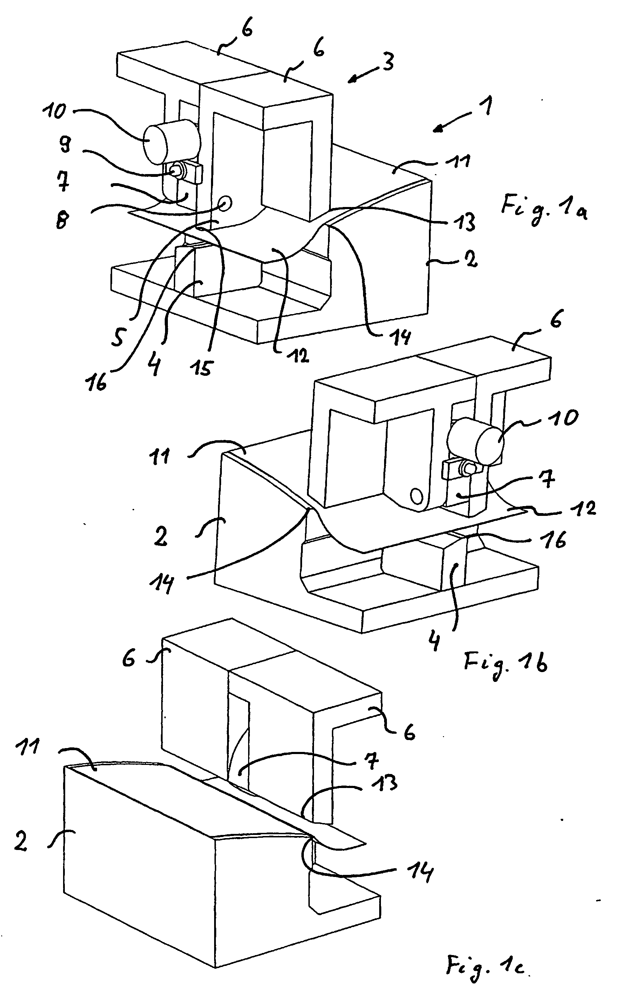

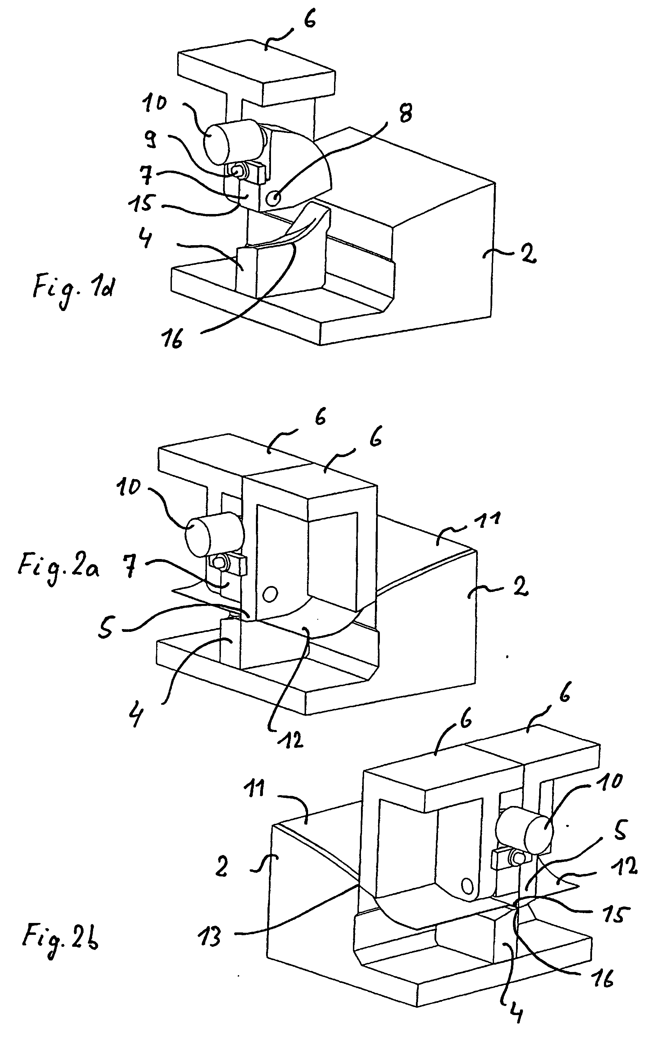

Während Fig. 1 den Zustand der Anlage vor dem Abschneiden des Randes 12 zeigt, zeigt Fig. 2 den Zustand nach dem Abschneiden des Randes 12, aber vor dessen Auftrennung in die Teile 12.1 und 12.2.

Wie die Figuren 2 zeigen, hat die Schnittkante 13 den Randbereich 12 des Bleches 11 mit Hilfe der Schnittkante 14 abgetrennt. Hierbei befindet sich der verschwenkbare Teil 7 des Obermessers 3 immer noch in der in Fig. 1 gezeigten Ausgangsstellung. Damit konnte der gesamte Randbereich 12 von dem Blechteil 11 in einem Arbeitsgang abgetrennt werden. Dieser Randbereich 12 liegt nun auf den am Umfang der Anlage verteilt angeordneten unteren Abfalltrennmessern 4 auf (siehe Fig. 2b und 2d, wobei bei letzterer wieder ein Teil des Obermessers 3 zur Verdeutlichung weggelassen wurde). Da er in sich geschlossen ist, muss er in einzelne Abschnitte aufgeteilt werden, um aus der Schneidanlage abtransportiert werden zu können.

Bevor nun der Randbereich 12 zwischen den Schnittkanten 15 des oberen Abfalltrennmessers 5, das einteilig mit dem Obermesser 3 ausgebildet ist, mit Hilfe der Schnittkante 16 des unteren Abfalltrennmessers 4 durchgetrennt werden kann, muss der Vorderbereich der Schnittkante 15 von dem verschwenkbar gelagerten Teil 7 des Obermessers 3 freigegeben werden.

Dies geschieht bei einer weiteren Abwärtsbewegung des Obermessers 3. Durch diese Abwärtsbewegung 3 gelangt die vordere Unterseite des verschwenkbaren Teils 7 unter Zwischenschaltung des Randes 12 mit dem unteren Abfalltrennmesser 4 in Kontakt. Dadurch wird auch der abgeschnittene Rand 12 auf jedem unteren Abfalltrennmesser 4 geklemmt.

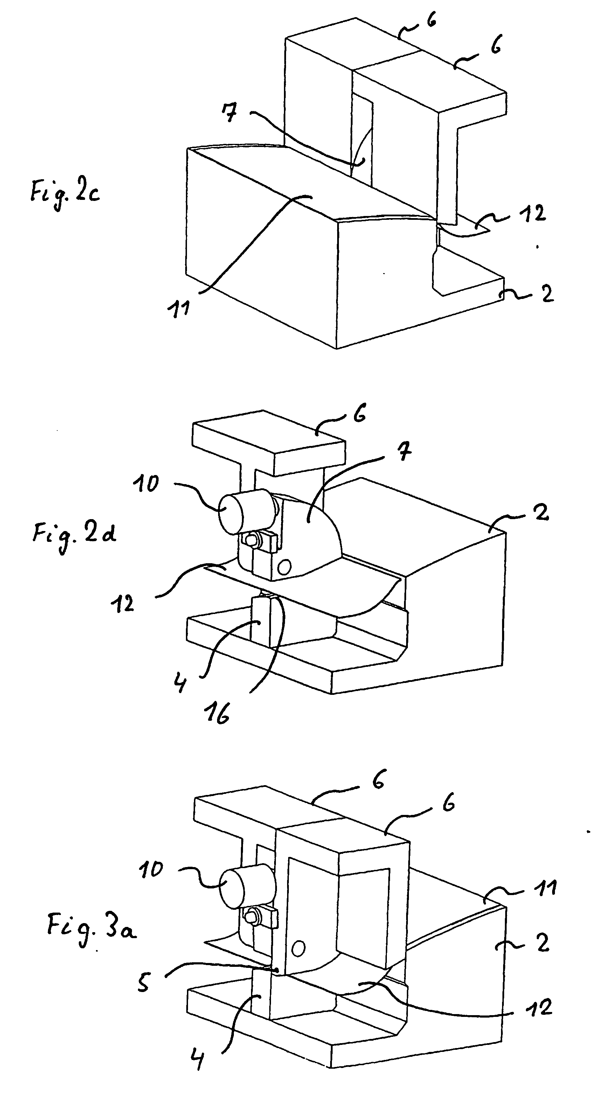

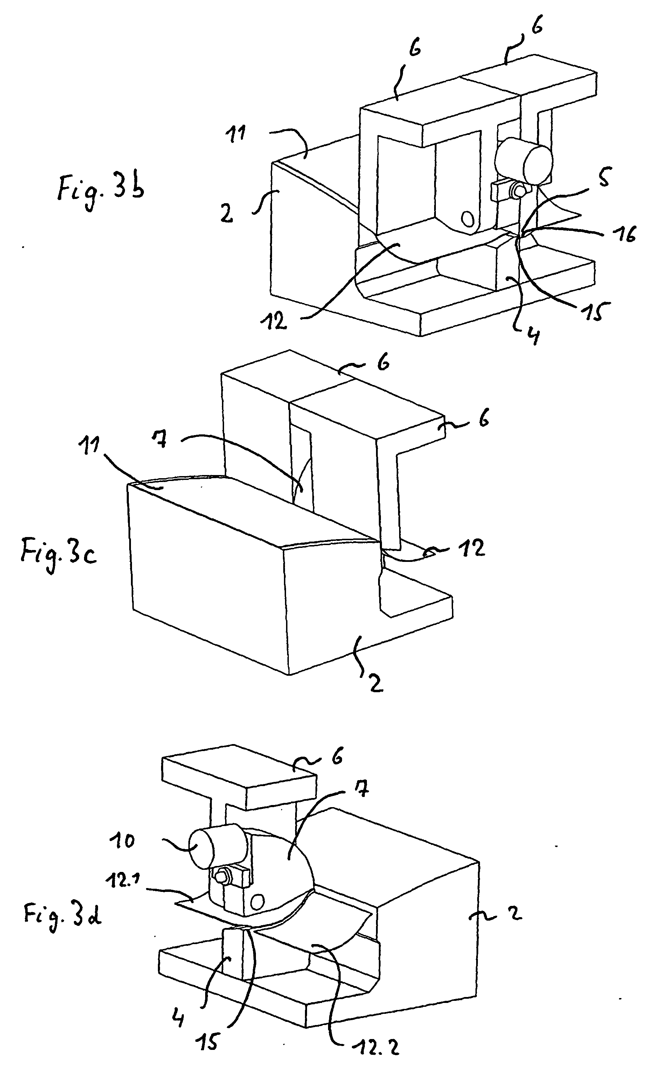

Eine weitere Abwärtsbewegung erhöht zum einen die Klemmkraft und verschwenkt zum anderen das Teil 7 gegen die Kraft der Gasfeder 10 und gibt so den vorderen Bereich der Schnittkante 15 frei, so dass sie mit der Schnittkante 16 zusammenwirken und den Randbereich 12 auf seiner ganzen Breite durchschneiden kann. Diese Endstellung, in der der Rand 12 bereits in die beiden Teile 12.1 und 12.2 getrennt ist, ist in Fig. 3, insbesondere Fig. 3d, dargestellt.

Anschließend fährt das Obermesser wieder vertikal nach oben, so dass der Rand 12 und das Blechteil 11 aus der Anlage entnommen bzw. abgeführt werden können.

Hierbei drückt die Gasfeder 10 den verschwenkbaren Teil 7 wieder in seine Ausgangslage.

Nach Einlegen eines neuen Blechteils 11 mit Randbereich 12 beginnt dann ein Arbeitstakt von neuem.

## Patentansprüche

1. Vorrichtung zum Beschneiden des Randes eines Blechteiles und zum Trennen des abgeschnittenen Randes in mindestens zwei Teilstücke, bestehend aus einem vertikal verfahrbaren mindestens zweiteilig ausgebildeten Obermesser (9) mit einer geschlossenen Schnittkante zum Beschneiden, wobei ein Teil (7) des Obermessers unter Bildung einer kurzen Teilschnittkante in dem anderen Teil (6) des Obermessers verschwenkbar gelagert ist, aus einem mit dem Obermesser zusammenwirkenden Untermesser (2), sowie aus einem im wesentlichen senkrecht zum Untermesser angeordneten unteren Abfalltrennmesser (4), das mit einem oberen Abfalltrennmesser (5) zusammenwirkt,
**dadurch gekennzeichnet, dass** das obere Abfalltrennmesser (5) starr an dem Obermesser (3) befestigt ist und dass der schwenkbare Teil (7) des Obermessers (3) derart gelagert ist, dass er in seiner Schnittposition mit der vorderen Schnittkante (15) des oberen Abfalltrennmessers (5) zumindest fluchtet und nach Beschneiden des Randes die vordere Schnittkante des oberen Abfalltrennmessers (5) freigibt.

2. Vorrichtung nach Anspruch 1,
**dadurch gekennzeichnet, dass** der verschwenkbar gelagerte Teil (7) des Obermessers (3) um eine hintere Schwenkachse (8) verschwenkbar ist.

3. Vorrichtung nach Anspruch 1 oder 2,
**dadurch gekennzeichnet, dass** die Mittellinie der Schwenkachse (7a) oberhalb der Schnittkante (13) des Obermessers (3) liegt.

4. Vorrichtung nach einem der vorangegangenen Ansprüche,
**dadurch gekennzeichnet, dass** der schwenkbar gelagerte Teil (7a) des Obermessers (3) gegen die Kraft einer Feder (10) verschwenkbar ist.

5. Vorrichtung nach einem der vorangegangenen Ansprüche,
**dadurch gekennzeichnet, dass** der schwenkbare Teil (7) des Obermessers (3) bei einer Abwärtsbewegung des Obermessers (3) auf dem unteren Abfalltrennmesser (4) aufliegt und bei einer weiteren Abwärtsbewegung gegen die Kraft der Feder (10) verschwenkt wird.

6. Vorrichtung nach einem der vorangegangenen Ansprüche,
**dadurch gekennzeichnet, dass** die Kraft der Feder (10) und die aus dem Gewicht des verschwenkbar gelagerten Teils (7) des Obermessers (3) resultierende Gewichtskraft größer sind als die zum Beschneiden des Randes benötigte Schnittkraft.

7. Vorrichtung nach einem der vorangegangenen Ansprüche,
**dadurch gekennzeichnet, dass** die Schnittkante (13) des verschenkbar gelagerten Teils (7) des Obermessers (3) durch einen an diesem Teil einstellbar angeordneten Anschlag einstellbar ist.

## Claims

1. A device for trimming the edge of a sheet-metal part and dividing the cut-off edge into at least two parts, the device comprising a vertically movable, at least two-part top cutter (9) with a continuous cutting edge for trimming, a part (7) of the top cutter being pivotably mounted in the other part (6) of the top cutter, forming a short partial cutting edge, also comprising a bottom cutter (2) co-operating with the top cutter and a bottom waste-dividing cutter (4) disposed substantially vertically in line with the bottom cutter and co-operating with a top waste-dividing cutter (5),
**characterised in that** the top waste-dividing cutter (5) is rigidly fastened to the top cutter (3) and the pivotable part (7) of the top cutter (3) is so mounted that in its cutting position it is aligned at least with the front cutting edge (15) of the top waste-dividing cutter (5), and after trimming the edge it uncovers the top cutting edge of the top waste-dividing cutter (5).

2. A device according to claim 1, **characterised in that** the pivotably mounted part (7) of the top cutter (3) is pivotable around a rear axis (8).

3. A device according to claim 1 or 2, **characterised in that** the centre line of the pivoting axis (7a) is above the cutting edge (13) of the top cutter (3).

4. A device according to any of the preceding claims, **characterised in that** the pivotably mounted part (7a) of the top cutter (3) is pivotable against the force of a spring (10).

5. A device according to any of the preceding claims, **characterised in that** when the top cutter (3) moves downwards the pivotable part (7) of the top cutter (3) rests on the bottom waste-dividing cutter (4) and after further downward movement pivots against the force of the spring (10).

6. A device according to any of the preceding claims, **characterised in that** the force of the spring (10) and the force resulting from the weight of the pivotably mounted part (7) of the top cutter (3) are greater than the cutting force needed for trimming the edge.

7. A device according to any of the preceding claims, **characterised in that** the cutting edge (13) of the pivotably mounted part (7) of the top cutter (3) is adjustable via a stop adjustably disposed on the said part.

## Revendications

1. Dispositif de rognage d'une tôle et de séparation du bord rogné en au moins deux pièces, composé d'une lame supérieure (3) formée d'au moins deux parties, pouvant être déplacée à la verticale et munie d'une arête de coupe fermée pour le rognage, une partie (7) de la lame de coupe étant disposée de manière pivotante pour la formation d'une arête de coupe partielle courte dans l'autre partie (6) de la lame supérieure, ainsi que d'une lame inférieure (2) agissant conjointement avec la lame supérieure, d'un couteau inférieur de sectionnement des déchets (4) disposé essentiellement à la verticale de la lame inférieure et agissant conjointement avec un couteau supérieur de sectionnement des déchets (15),
**caractérisé en ce que**
le couteau supérieur de sectionnement des déchets (5) est fixé de manière rigide à la lame supérieure (3) et la partie pivotante (7) de la lame inférieure (3) est disposée de manière à affleurer au moins dans sa position de coupe l'arête de coupe avant (15) du couteau supérieur de sectionnement des déchets (5) et à débloquer l'arête de coupe avant du couteau supérieur de sectionnement des déchets (5) après le rognage du bord.

2. Dispositif selon la revendication 1,
**caractérisé en ce que**
la partie (7) disposée de manière pivotante de la lame supérieure (3) peut tourner autour d'un axe arrière (8).

3. Dispositif selon la revendication 1 ou 2,
**caractérisé en ce que**
la ligne médiane de l'axe de pivotement (7a) se trouve au-dessus de l'arête de coupe (13) de la lame supérieure (3).

4. Dispositif selon l'une quelconque des revendications précédentes,
**caractérisé en ce que**
la partie (7a) disposée de manière pivotante de la lame supérieure (3) peut basculer contre la force d'un ressort (10).

5. Dispositif selon l'une quelconque des revendications précédentes,
**caractérisé en ce que**
la partie (7) de la lame supérieure (3) disposée de manière pivotante se trouve sur le couteau inférieur de sectionnement des déchets (4) dans le cas d'un mouvement descendant de la lame supérieure (3) et peut basculer contre la force du ressort (10) en cas de nouveau mouvement descendant.

6. Dispositif selon l'une quelconque des revendications précédentes,
**caractérisé en ce que**
la force du ressort (10) et la force du poids résultant du poids de la partie (7), logée de manière pivotante, de la lame supérieure (3) sont supérieures à la force de coupe requise pour le rognage du bord.

7. Dispositif selon l'une quelconque des revendications précédentes,
**caractérisé en ce que**
l'arête de coupe (13) de la partie (7a), logée de manière pivotante, de la lame supérieure (3) peut être réglée par une butée disposée de manière réglable sur cette partie.
